(19) **Europäisches Patentamt / European Patent Office / Office européen des brevets**

(11) **EP 1 833 186 A1**

(12) **EUROPEAN PATENT APPLICATION**
published in accordance with Art. 158(3) EPC

(43) Date of publication:
**12.09.2007 Bulletin 2007/37**

(51) Int Cl.:
**H04J 15/00** *(2006.01)*

(21) Application number: **04808005.5**

(22) Date of filing: **28.12.2004**

(86) International application number:
**PCT/JP2004/019650**

(87) International publication number:
**WO 2006/070478 (06.07.2006 Gazette 2006/27)**

(84) Designated Contracting States:
**DE FR GB IT**

(71) Applicant: **Fujitsu Ltd.**
**Kawasaki-shi, Kanagawa 211-8588 (JP)**

(72) Inventor: **SEKI, Hiroyuki c/o FUJITSU LIMITED,**
**1-1,**
**Kanagawa; 2118588 (JP)**

(74) Representative: **HOFFMANN EITLE**
**Patent- und Rechtsanwälte**
**Arabellastrasse 4**
**81925 München (DE)**

(54) **WIRELESS COMMUNICATION SYSTEM**

(57) A transmitting apparatus (1) forms a plurality of transmission beams 1~M by using a plurality of antennas (15-1~15-4). Transmission beams 2 and 3, the correlation of which is low and the reception quality of which is high, are selected. A data stream 1 is transmitted by using the transmission beam 2, and a data stream 2 is transmitted by using the transmission beam 3. As a result, a MIMO multiplexing transmission using an adaptive array antenna is implemented.

F I G. 4

EP 1 833 186 A1

## Description

## Technical Field

The present invention relates to a wireless communication system and a communicating apparatus used in the wireless communication system, and more particularly, to a transmitting apparatus and a receiving apparatus to perform a data transmission with a multi-input multi-output (MIMO) transmission method in the wireless communication system.

## Background Art

In recent years, attention has been focused on a spatial multiplexing transmission technique for increasing a transmission capacity in proportion to the number of transmission antennas by transmitting different data streams in parallel from a plurality of transmission antennas in a wireless communication system. In this case, the plurality of transmission antennas are arranged in separate positions so that they become mutually uncorrelated, and the data streams that are transmitted respectively from the antennas are transmitted via respectively independent fading propagation paths and received by reception antennas. Furthermore, if a MIMO system is configured by using a plurality of reception antennas that are arranged to be mutually uncorrelated, a channel correlation matrix having a high degree of freedom can be generated, leading to an improvement in an SNR (Signal to Noise Ratio) when a plurality of spatially multiplexed data streams are demultiplexed.

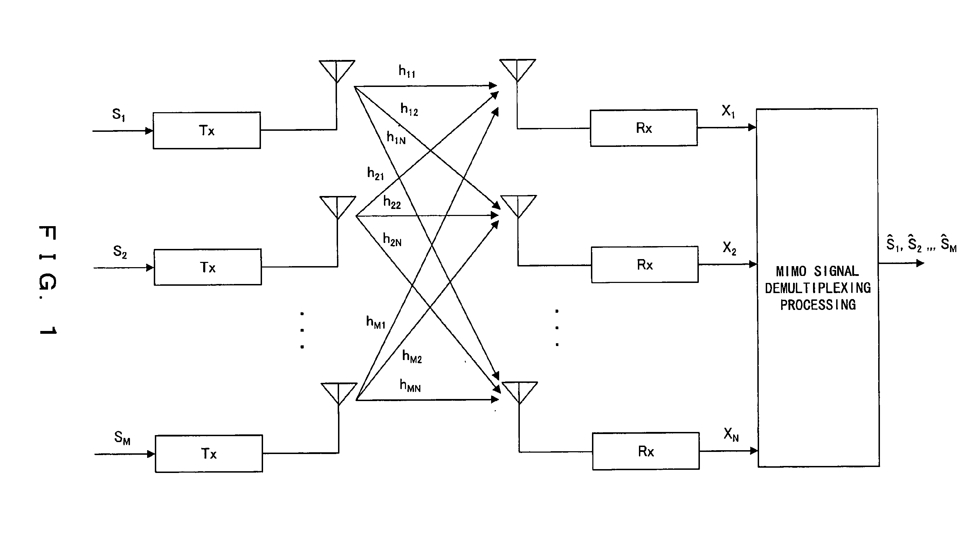

Fig. 1 shows the configuration of a general MIMO system. In the MIMO system shown in Fig. 1, a transmitting apparatus comprises M transmission antennas, and a receiving apparatus comprises N reception antennas.

The transmitting apparatus performs data modulation, sampling, D/A conversion, orthogonal modulation, frequency up-conversion, band restriction filtering, etc. respectively for M data streams $S_1 \sim S_M$, and transmits the data streams via their corresponding transmission antennas. After signals transmitted from the antennas pass through mutually independent fading channels $h_{mn}$ and spatially multiplexed, they are received by the reception antennas. "$h_{ij}$" represents the characteristic of a channel from the i-th transmission antenna to the j-th reception antenna.

The receiving apparatus generates N reception data streams $x_1 \sim x_N$ by performing filtering, frequency down-conversion, orthogonal detection, and A/D conversion respectively for the received signals. Each of the reception data streams is generated by multiplexing M pieces of transmission data. Therefore, the signal processing is executed for all of the reception data streams, whereby the transmission data streams $S_1 \sim S_M$ are demultiplexed/reproduced. As a signal processing algorithm for demultiplexing transmission data streams in the receiving apparatus, ZF (Zero-Forcing) or MMSE (Minimum Mean Square Error), which uses the inverse matrix of a channel correlation matrix, is known. Additionally, as a signal processing algorithm with which the inverse matrix calculation of a channel correlation matrix is not performed, MLD (Maximum Likelihood Decoding) is known.

As other techniques using pluralities of transmission/reception antennas in a wireless communication system, beam forming using a transmission array antenna, and an adaptive array antenna using a reception array antenna are known. In the systems using such techniques, a plurality of antenna elements, which configure an array antenna, are arranged to be mutually adjacent so that a correlation among the antennas becomes high, unlike the MIMO transmission method.

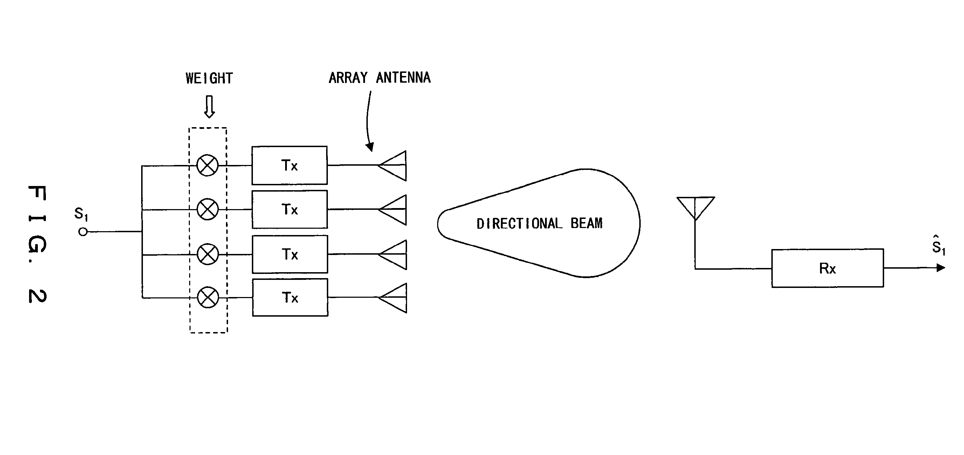

Fig. 2 shows a system that performs transmission beam forming by using an array antenna. In Fig. 2, a data stream $S_1$ is copied by the same number as the number of antennas, and multiplied by weights that differ by antenna. As a result, a transmission beam having directionality is formed, and reception quality is improved according to the gain of the directional antenna in a receiving apparatus.

Incidentally, in a next-generation mobile communication system, a relatively high carrier frequency such as 5 GHz, etc. can be possibly used, and a propagation loss increases to shorten a transmission distance in this case. Additionally, the power of a transmission signal must be increased with the speedup of a transmission rate or the broadening of a bandwidth. Accordingly, the next-generation mobile communication system requires a technique for increasing a transmission distance and for preventing transmission power from increasing by using an array antenna with which a large antenna gain can be obtained. Additionally, with the MIMO transmission method, a transmission rate becomes high in proportion to the number of transmission antennas, and spectrum efficiency significantly increases. Therefore, this method is considered to be an important technique in the next-generation mobile communication system.

As described above, both the MIMO transmission and the array antenna are important techniques in a next-generation mobile communication system. Accordingly, if these techniques are made to coexist in the same base station system, improvements in communication performance are expected. For the MIMO transmission technique, however, it is desirable that a correlation among antennas is low. Therefore, the intervals of antennas are set to 10 times or more of a carrier wavelength in many cases. In the meantime, for the array antenna, it is desirable that a correlation among antennas is high. Accordingly, it is adequate that the intervals of antennas of an array antenna are on the order of one half to one wavelength of a carrier wave in a base station of a general cellular mobile communication. Therefore, it is not easy to make the MIMO transmission technique and the array antenna technique coexist without increasing the size of the apparatus in the same base station system.

Patent Document 1 recites the technique with which a MIMO transmission and an array antenna are combined. Fig. 3 shows the system recited in Patent Document 1. A transmitting apparatus in the system shown in Fig. 3 comprises two sets of sub-array antennas. Here, the sub-array antennas are configured respectively with a plurality of antenna elements, for which suitable weights are respectively set. As a result, the sub-array antennas respectively form mutually independent transmission beams. Then, different data streams are transmitted respectively via the sub-array antennas, whereby a MIMO multiplexing transmission is achieved.

However, to reduce a correlation between the directional beams transmitted from the sub-array antennas, these sub-array antennas are arranged at intervals of 10 times or more of the wavelength of a carrier wave. Therefore, a space for mounting the antennas becomes large. Additionally, for the transmitting apparatus recited in Patent Document 1, "the number of transmission antennas" = "the number of antenna elements that configure each sub-array antenna" $\times$ "the number of sub-array antennas (the number of MIMO multiplexing)" is required, leading to an increase in the size of the apparatus.

Patent Document 2 recites the technique with which array weights that differ by data stream are multiplied to perform a MIMO transmission. In the system recited in Patent Document 2, however, it is a prerequisite to use both a transmission antenna weight in a transmitting apparatus and a reception antenna weight in a receiving apparatus. Additionally, the transmission antenna weight is obtained by calculating a plurality of eigen vectors by using a channel matrix H and a correlation matrix R. Accordingly, since a MIMO signal demultiplexing method is restricted, the degree of freedom of design is expected to become low, and an algorithm for obtaining the antenna weight is expected to become complicated (namely, the amount of computation is large).

Patent Document 1: Japanese Published Unexamined Patent Application No. 2003-338781 (Fig. 1, paragraphs of the specification 0038 to 0044)
Patent Document 2: Japanese Published Unexamined Patent Application No. 2004-72566 (Figs. 1, 2, and 5, paragraphs of the specification 0010, 0046 to 0047)

**Disclosure of Invention**

An object of the present invention is to implement a high-speed data transmission, the communication quality of which is high, without increasing the size of a communicating apparatus.

The communicating apparatus according to the present invention is used in a wireless communication system; and comprises a plurality of antennas, transmission beam forming means for forming a plurality of transmission beams by multiplying the plurality of antennas by transmission weight sets of a plurality of patterns, and transmitting means for transmitting mutually different data streams by using two or more transmission beams, the correlation of which is lower than a predetermined correlation threshold value, among the plurality of transmission beams. According to the present invention, a spatial multiplexing transmission, which transmits a plurality of data streams in parallel, can be implemented even if the intervals of the plurality of antennas are narrow. Namely, the communicating apparatus that can perform a high-speed data transmission can be downsized.

The transmitting means may transmit mutually different data streams by using two or more transmission beams, the correlation of which is lower than a predetermined correlation threshold value and the reception quality of which is higher than a predetermined quality threshold value, among the plurality of transmission beams. By introducing this configuration, communication quality can be improved.

Additionally, the transmitting means may transmit data by using one transmission beam, the reception quality of which is the highest, if two or more transmission beams are not selected. By introducing this configuration, a transmission rate can be adaptively controlled according to the state of a transmission path.

A communicating apparatus according to another aspect of the present invention is used in a wireless communication system that spatially multiplexes and transmits a plurality of mutually different data streams, and comprises a plurality of antennas, reception beam forming means for forming a plurality of reception beams by multiplying the plurality of antennas by reception weight sets of a plurality of patterns, selecting means for selecting two or more reception beams, the correlation of which is lower than a predetermined correlation threshold value, from among the plurality of reception beams, and demultiplexing means for demultiplexing the plurality of data streams by using reception signals which are obtained via the two or more reception beams selected by the selecting means. According to this invention, beams suitable for MIMO signal demultiplexing are selected from among a plurality of reception beams, thereby improving communication quality.

## Brief Description of Drawings

Fig. 1 shows a configuration of a general MIMO system;
Fig. 2 shows a system that performs transmission beam forming by using an array antenna;
Fig. 3 shows a system recited in Patent Document 1;
Fig. 4 explains the concept of the present invention;
Fig. 5 shows an embodiment of multiplication circuits;
Fig. 6 explains a method for forming a directional beam;
Fig. 7 shows a configuration of a transmitting apparatus according to a first embodiment;
Fig. 8 shows an example of multiplexing of channels;
Fig. 9 shows a configuration of a receiving apparatus according to the first embodiment;
Fig. 10 shows a configuration of a transmitting apparatus according to a second embodiment;
Fig. 11 shows a configuration of a receiving apparatus according to the second embodiment;
Fig. 12 shows a configuration of a transmitting apparatus according to a third embodiment; and
Fig. 13 shows a configuration of a receiving apparatus according to a fourth embodiment.

## Best Mode of Carrying Out the Invention

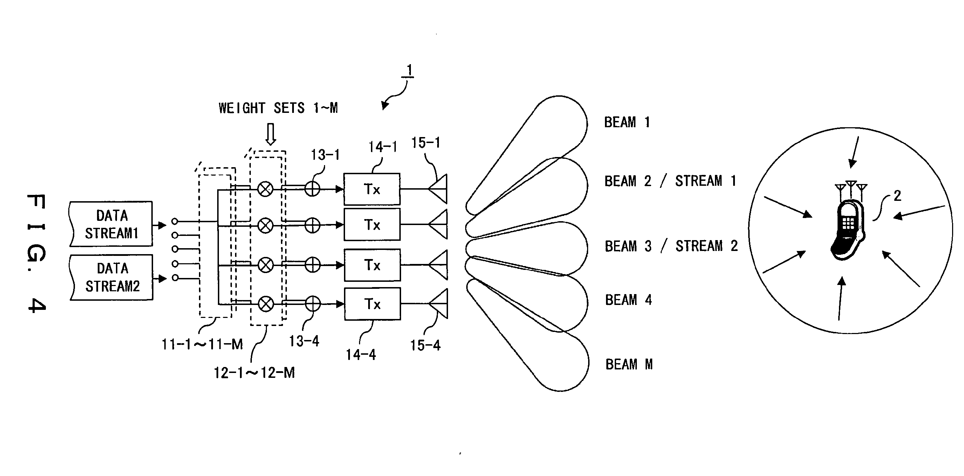

Fig. 4 explains the concept of the present invention. It is a vital requirement to increase the radius of a cell, and to decrease the transmission power of a terminal in the design of a wireless communication system. Accordingly, a wireless communication system according the present invention is defined so that at least a transmitting apparatus comprises an array antenna, in order to satisfy the requirement. Based on this, the wireless communication system according to the present invention introduces a MIMO multiplexing transmission that can perform a high-speed data transmission without increasing the size of the apparatus (namely, without increasing the numbers of antennas and transmitters). In the following description, a "MIMO multiplexing transmission" is not limited to a system including a plurality of transmission antennas and a plurality of reception antennas, and defined to widely include a system that spatially multiplexes and transmits a plurality of mutually different data streams.

In Fig. 4, a transmitting apparatus 1 is, for example, a base station (BS), whereas a receiving apparatus is, for example, a mobile station (MS). However, the present invention is not limited to this configuration, and also applied to a case

where data is transmitted from a mobile station to a base station. Additionally, in the example shown in Fig. 4, the transmitting apparatus 1 is assumed to be able to form M transmission beams by using an adaptive array antenna having four antenna elements.

The transmitting apparatus 1 comprises input ports 11 (11-1~11-M), multiplication circuits 12 (12-1~12-M), addition circuits 13 (13-1~13-4), transmitters 14 (14-1~14-4), and antennas 15 (15-1~15-4). The input ports 11 respectively distribute input data streams to multipliers of the corresponding multiplication circuits 12. For example, the input port 11-1 distributes an input data stream to the multipliers of the multiplication circuit 12-1.

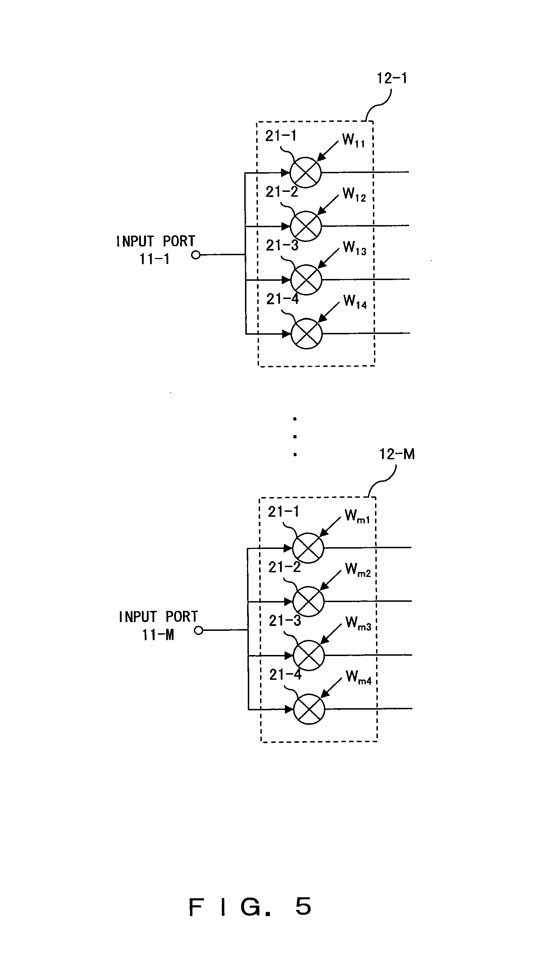

The multiplication circuits 12-1~12-M respectively comprise four multipliers 21-1~21-4 as shown in Fig. 5. Additionally, corresponding weight sets (or weight patterns) are given to the multiplication circuits 12-1~12-M. Here, the weight sets 1~M are respectively composed of four weights. For example, the weight set 1, which is given to the multiplication circuit 12-1, is composed of W11~W14, and the weight set M, which is given to the multiplication circuit 12-M, is composed of Wm1~Wm4. The multipliers 21-1~21-4 respectively multiply an input signal by weights.

The addition circuits 13 respectively add the outputs of the corresponding multipliers. For example, the addition circuit 13-1 calculates the sum of the outputs of the multipliers 21-1 of the multiplication circuits 12, and the addition circuit 13-4 calculates the sum of the outputs of the multipliers 21-4 of the multiplication circuits 12. The transmitters 14-1~14-4 respectively generate transmission signals from the outputs of the corresponding addition circuits 13-1~13-4. The antennas 15-1~15-4 respectively transmit the signals generated by the corresponding transmitters 14-1~14-4.

The transmitting apparatus 1 can form M desired transmission beams by suitably setting the different weight sets 1~M in the multiplication circuits 12-1~12-M.

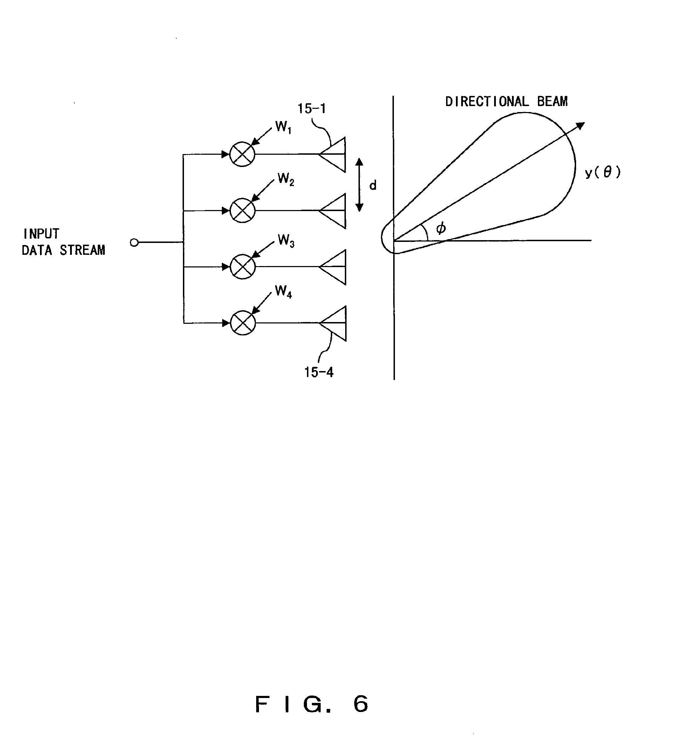

The transmission beams are formed as follows. For example, as shown in Fig. 6, in a linear array antenna where antennas 15-1~15-4 are arranged at intervals of d, each of the antennas is multiplied by a corresponding weight $w_n$ (n=1~4), thereby obtaining a directional pattern represented by an equation (1). Here, "y($\theta$)" represents a directional pattern. The weight $w_n$ is represented by an equation (2). A steering vector $V_n(\theta)$ is represented by an equation (3). "$\lambda$" is the wavelength of a carrier wave. In this way, each of the antennas is multiplied by the weight $w_n$, whereby a transmission beam having the maximum directionality in the direction of $\phi$ can be formed. Namely, a transmission beam having a maximum directionality in a desired direction can be formed by suitably setting the weight $w_n$.

$$y(\theta) = \sum_{n=1}^{4} w_n \cdot V_n(\theta) = \sum_{n=1}^{4} e^{j\frac{2\pi d}{\lambda}n(\sin\phi - \sin\theta)} \qquad (1)$$

$$w_n = e^{j\frac{2\pi d}{\lambda}n\sin\phi} \qquad (2)$$

$$V_n(\theta) = e^{-j\frac{2\pi d}{\lambda}n\sin\theta} \qquad (3)$$

The transmitting apparatus 1 forms M transmission beams having maximum directionalities in different directions ($\phi$1, $\phi$2, ..., $\phi$M) as shown in Fig. 4. Then, the transmitting apparatus 1 selects a plurality of beams, the correlation of which is low and the reception quality of which is high, from among the M transmission beams, and performs a MIMO multiplexing transmission by using the plurality of selected transmission beams. In the example shown in Fig. 4, transmission beams 2 and 3 are selected. Then, two data streams 1 and 2 are simultaneously transmitted by using these two transmission beams. Namely, the data stream 1 is transmitted by using the transmission beam 2, whereas the data stream 2 is transmitted by using the transmission beam 3. At this time, the data stream 1 is multiplied by an antenna weight for forming the transmission beam 2 in the multiplication circuit 12-2. Similarly, the data stream 2 is multiplied by an antenna weight for forming the transmission beam 3 in the multiplication circuit 12-3.

If three transmission beams the correlation of which is low and the reception quality of which is high are selected, a MIMO transmission of 3 multiplexing is performed by using the three selected transmission beams. Or, if four transmission beams are selected, a MIMO transmission of 4 multiplexing is performed by using the four selected transmission beams. If a combination of transmission beams the correlation of which is low does not exist, a normal beam forming transmission is performed by using a transmission beam with the highest reception quality.

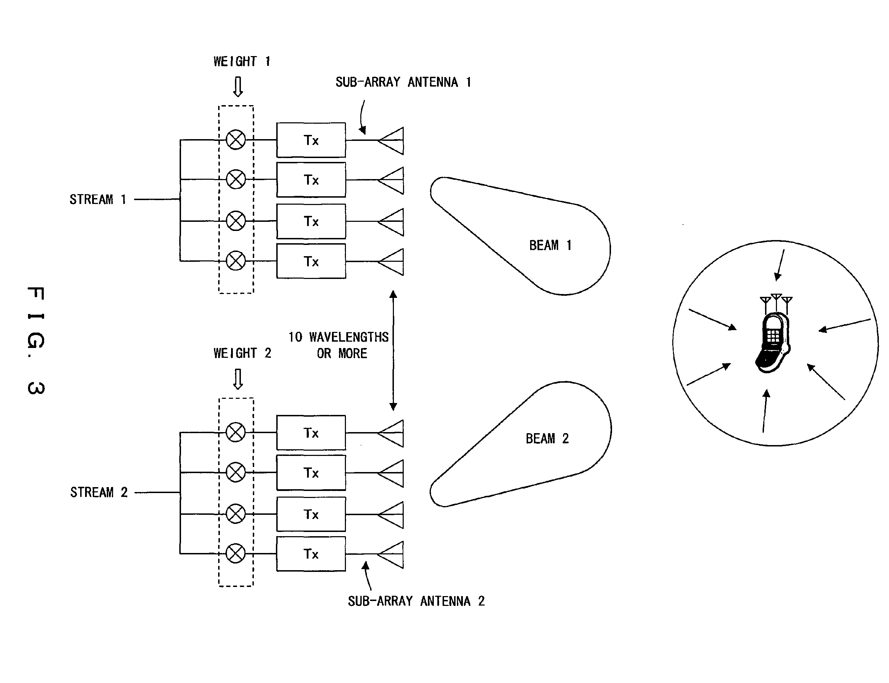

The basic configuration of the antenna of the transmitting apparatus 1 is the same as an array antenna. If a plurality of antennas the correlation of which is low and the reception quality of which is high exist, a MIMO multiplexing transmission is performed. As a result, a high-speed data communication having high spectrum efficiency is implemented. Additionally, an efficient communication system can be implemented by making an array antenna and a MIMO multiplexing transmission coexist without increasing the number of antennas as in the conventional configuration shown in Fig. 3, and by switching between effective transmission methods according to the state of a propagation path.

In Fig. 4, there is no need to simultaneously transmit the M beams when transmission beams the correlation of which is low and the reception quality of which is high are not selected. The M beams can be transmitted while being sequentially switched at predetermined time intervals. For example, if the transmitting side transmits signals while sequentially switching from the beam 1 to the beam M at predetermined timings, the receiving side can calculate the propagation path characteristic (channel response) of the beam 1 to the beam M at respective timings. At this time, if a change in the state of a propagation path is slower than a speed at which the beams are switched, a correlation between antennas can be calculated at a time point when the propagation path characteristics of all the beams are obtained. With such a method, a plurality of beams the correlation of which is low and the reception quality of which is high can be searched by sweeping transmission beams at fine angle intervals.

As described above, the transmitting apparatus 1 transmits data streams by using one or a plurality of transmission beams. If a plurality of transmission beams are used at this time, a MIMO multiplexing transmission is performed. Then, the transmitting apparatus 1 notifies the receiving apparatus 2 of the finally determined transmission method (namely, the number of MIMO multiplexing, and selected transmission beams) by using a control channel separate from a data channel, or the like.

The receiving apparatus 2 executes a demodulation process including MIMO signal demultiplexing process according to the notified transmission method. Here, the MIMO signal demultiplexing is performed, for example, with a ZF algorithm, an MMSE algorithm, an MLD algorithm, or the like. ZF, MMSE, and MLD are briefly described below although they are known techniques.

If a transmission data stream and a reception data stream are represented respectively with an M-dimensional complex matrix S and an N-dimensional complex matrix X, the following equations (4) and (5) are obtained.

$$X = HS + V \qquad (4)$$

$$E\left[VV^{\bullet}\right] = \sigma_V I \qquad (5)$$

where "H" is a complex channel matrix of N×M, which represents the state of a transmission path between the transmitting apparatus and the receiving apparatus, "V" represents a complex white noise matrix which has dispersion $\sigma_v$ and the average value of which is zero, "*" represents a complex conjugate transposition of a matrix, and "I" represents an N-dimensional unit matrix.

With the ZF algorithm, the receiving apparatus estimates a transmission data stream S from a reception data stream X based on the following equation (6). Here, "H*H" is a channel correlation matrix. However, for the existence of the inverse matrix of the channel correlation matrix, "N≥M" must be satisfied.

$$\hat{S} = \left(H^{\bullet}H\right)^{-1} H^{\bullet} X \qquad (6)$$

With the MMSE algorithm, the receiving apparatus estimates a transmission data stream S from a reception data stream X based on the following equations (7)~(9). Here, "ρ" is equivalent to an SNR per reception antenna.

$$\hat{S} = \left(H^{\bullet}H + \alpha I\right)^{-1} H^{\bullet} X \qquad (7)$$

$$\alpha = \sigma_V / \sigma_S = M / \rho \qquad (8)$$

$$E\left[SS^{\bullet}\right] = \sigma_S I \qquad (9)$$

With the MMES algorithm, the SNR must be estimated with high accuracy. However, since the MMES algorithm can reduce the influence of noise enhancement in the ZF algorithm, it is normally superior to the ZF algorithm in its characteristic.

With the MLD algorithm, the receiving apparatus estimates a transmission data stream S from a reception data stream X based on the following equation (10) . Here, "Q" is the number of signal points of modulation data. Q=4 in QPSK, Q=16 in 16QAM, and Q=64 in 64QAM. "Si" is a vector that represents each signal point used when transmission data is modulated.

$$\hat{S} = \arg\min_k \|X - HS_k\|^2 \quad S_k \in \{S_1 \cdots S_K\} \quad K = Q^M \qquad (10)$$

With the MLD algorithm, the amount of computation of higher-order modulation becomes enormous, and the amount of computation increases exponentially with the number of transmission antennas. With the MLD algorithm, however, the computation of the inverse matrix of the channel correlation matrix is not required. Accordingly, there is no need to satisfy the relationship of "N≥M". Additionally, the MLD algorithm can normally improve the reception quality in comparison with the ZF or the MMSE.

A method for selecting a plurality of transmission beams the correlation of which is low and the reception quality of which is high is described next. Here, a method for measuring a correlation coefficient between beams and their reception quality in the receiving apparatus, and for feeding back the results of the measurement to the transmitting apparatus by using a control channel of a reverse link, or the like is described.

In this case, the transmitting apparatus transmits orthogonal pilot signals with respect to the transmission beams. The orthogonalization of pilot signals is implemented, for example, with a method using an orthogonal code, or a method for mutually shifting the transmission timings of pilots of transmission beams. If an orthogonal code is used, a pilot signal of a plurality of symbols is used, and each of the pilot symbols is multiplied by the orthogonal code. As a result, the receiving apparatus can respectively extract the pilot signals of the desired transmission beams.

The receiving apparatus calculates propagation path information (channel information) h based on the pilot signals of the beams, which are extracted as described above. Namely, when a pilot signal $S_p$ is transmitted by using the k-th transmission beam, a pilot signal $x_p$ detected by the receiving apparatus is represented with the following equation (11).

$$X_p = h_k \cdot S_p \qquad (11)$$

At this time, the pilot signal Sp is known beforehand. Therefore, the pilot signal $x_p$ is detected by the receiving apparatus, whereby propagation path information $h_k$ of the k-th transmission beam can be calculated.

Additionally, if the propagation path information h is calculated in consideration of noise n in the receiving apparatus, the following procedures are followed. Here, assume that transmission data and a reception signal are "s" and "x" respectively. In this case, the reception signal x is represented with the following equation (12).

$$X = h \cdot s + n \qquad (12)$$

Also assuming that the transmission data s is a known pilot signal, an estimation value h' of the propagation path information can be obtained with the following equation (13).

$$h' = x \cdot \frac{s^*}{|s|^2} = h + n \cdot \frac{s^*}{|s|^2} = h + n' \qquad (13)$$

A case where a transmission beam is formed by using a weight is further considered. Assume that the weight of the i-th transmission antenna is "$w_i$", and propagation path information between the i-th transmission antenna and a reception antenna (here, the number of reception antennas is assumed to be one) is "$h_i$", in the following description. In this case, a reception signal x is represented with the following equation (14). "N" is the number of transmission antennas. Additionally, "$h_{BF}$" is propagation path information after beam forming, and represented with the following equation (15).

$$x = \sum_{i=1}^{N} h_i \cdot w_i \cdot s + n = h_{BF} \cdot s + n \qquad (14)$$

$$h_{BF} = \sum_{i=1}^{N} h_i \cdot w_i \qquad (15)$$

Thus, the equation (14) that represents a reception signal when a transmission beam is used is the same equation as the equation (12) that represents a normal reception signal. Accordingly, also propagation path information when a transmission beam is used can be estimated with a method similar to the equation (13).

A method for calculating a correlation between transmission beams is described next. Assume that the propagation path estimation value of the k-th beam at a time t is "$h_k(t)$". Also assume that the propagation path information of the L-th beam is "$h_1(t)$". Then, a correlation coefficient $\rho(k,l)$ between the k-th and the L-th beams can be calculated by using the following equation (16).

$$\rho_{(k,l)} = \frac{\left\langle h_k^*(t) \cdot h_l(t) \right\rangle}{\sqrt{\left\langle |h_k(t)|^2 \right\rangle \left\langle |h_l(t)|^2 \right\rangle}} \qquad (16)$$

Additionally, the reception quality of the k-th beam can be calculated, for example, with the following equation (17) or (18) . The equation (17) represents the reception quality by using reception power. In the meantime, the equation (18) represents the reception quality by using a reception SIR (Signal to Interference Ratio). In the equations (16)-(18), "<·>" means an ensemble average. Furthermore, the second term of the dominator of the equation (18) is an average value in a short section of "$h_k(t)$".

$$S_k = \left\langle |h_k(t)|^2 \right\rangle \qquad (17)$$

$$SIR_k = \frac{S_k}{\left\langle |h_k(t) - \bar{h}_k|^2 \right\rangle} \qquad (18)$$

According to the present invention, the number of MIMO multiplexing and transmission beams to be used are determined based on a correlation coefficient between beams, and reception quality information of each beam, which are obtained as described above. Assuming that the threshold value of the correlation coefficient and that of the reception SIR are "0.5" "10 dB" respectively, transmission beams the correlation coefficient p of which is equal to or smaller than 0.5 are selected, and beams the SIR of which is equal to or higher than 10 dB are selected from among the selected beams. The selection of transmission beams may be made by the receiving apparatus that measures the correlation coefficient between beams and the reception quality, or may be made by the transmitting apparatus after the correlation coefficient between beams and the reception quality are fed back to the transmitting apparatus.

As another method for selecting a plurality of transmission beams the correlation of which is low and the reception quality of which is high, there is a method for measuring a correlation coefficient between beams and communication quality in the transmitting apparatus. In this case, a propagation path of a reverse link, on which a signal is transmitted from the receiving apparatus to the transmitting apparatus, is used. For example, in a cellular mobile communication system, a propagation path from a mobile station to a base station is used if a transmitting apparatus to which the present invention is applied, and a receiving apparatus are assumed to be the base station and the mobile station respectively. Here, suppose that the base station can form a reception beam having almost the same directionality as a transmission beam. Actually, since the RF transmission characteristics of a transmitter and a receiver, which are comprised by the base station, and the carrier frequencies of transmission and reception are mutually different, a calibration must be made beforehand for a transmission system within the apparatus. Supposing that the calibration is made accurately, a correlation coefficient between transmission beams and communication quality can be estimated by measuring a correlation coefficient between reception beams, and the communication quality of each reception beam in the base station.

Here, assume that the reception signal of the k-th beam at a time t is "$r_k(t)$". Also assume that the reception signal of the L-th reception beam is "$r_1(t)$". Then, the estimation value of the correlation coefficient between the k-th and the L-th transmission beams can be calculated by using the following equation (19).

$$\rho_{(k,l)} = \frac{\left\langle r_k^*(t) \cdot r_l(t) \right\rangle}{\sqrt{\left\langle |r_k(t)|^2 \right\rangle \left\langle |r_l(t)|^2 \right\rangle}} \qquad (19)$$

Additionally, the estimation reception quality of the k-th transmission beam can be calculated by using the following equation (20) or (21). The equation (20) represents the communication quality by using reception power, whereas the equation (21) represents the communication quality by using a reception SIR. "<·>" means an ensemble average. Furthermore, the second term of the dominator of the equation (21) is an average value in a short section of "$r_k(t)$".

$$S_k = \left\langle |r_k(t)|^2 \right\rangle \qquad (20)$$

$$SIR_k = \frac{S_k}{\left\langle |r_k(t) - \bar{r}_k|^2 \right\rangle} \qquad (21)$$

The reception signal "$r_k(t)$" used in the equations (19)~(21) is represented, for example, with the following equation (22). In the equation (22), "M" is the number of reception antennas of the base station (the transmitting apparatus). "s" is a transmission pilot signal of the mobile station. "wi" is the weight of the i-th reception antenna of the base station. "hi" is channel information between the transmission antenna (the number of transmission antennas is assumed to be 1) of the mobile station and the i-th reception antenna of the base station. "ni" is thermal noise that occurs in the receiver of each antenna.

$$r_k = \sum_{i=1}^{M} (w_i \cdot h_i \cdot s + n_i) \qquad (22)$$

Then, the transmitting apparatus assumes that the directionalities of transmission and reception beams are the same, and estimates the correlation coefficient between transmission beams and the quality of each transmission beam by using pilot signals from the mobile station. A method for selecting one or a plurality of transmission beams to be used based on the correlation coefficient between transmission beams and the quality of each beam is fundamentally as described above.

Whether or not a plurality of beams the correlation coefficient of which is low exist depends on a propagation path between a transmitting apparatus and a receiving apparatus. If the present invention is applied to a cellular mobile communication, the base station is suitable as a transmitting station judging from the condition of a propagation path. The reason is as follows. Radio waves arrive normally in all directions in the mobile station as shown in Fig. 4, whereas radio waves arrive in almost a fixed direction in the base station because the height of antennas is high. Normally, it is said that the angle spread of radio waves in a cellular base station is 5-10 degrees. Due to such a nature of a propagation path, the following two cases are considered as the state of a propagation path, with which the present invention becomes effective. One is a case where the reflectors (scattering objects) of relatively strong radio waves exist at angles that are mutually apart when viewed from the base station. In such a case, beams respectively directed to the reflectors (scattering objects) of the radio waves are selected. The second case is a case where the angle spread of the base station is sufficiently wide relative to the width of a beam. Since different waves are synthesized and received respectively for beams in this case, a correlation between beams becomes low, and a plurality of adjacent beams are selected.

The present invention is applicable not only to a transmitting apparatus but also to MIMO signal demultiplexing in a receiving apparatus. Namely, a plurality of reception beams the correlation of which is low and the communication quality of which is high are selected by using the methods described with reference to the equations (19) ~ (21), and the MIMO signal demultiplexing can be made by using the signals of the plurality of selected reception beams. In this case, as an algorithm for the MIMO signal demultiplexing, an arbitrary algorithm such as the above described ZF, MMSE, MLD, etc. can be used. However, the present invention becomes particularly effective in the MIMO signal demultiplexing when the number of reception branches K, which can be processed, is smaller than that of array antennas N (namely, $N \geq K$). Supposing that a computation circuit for performing the MIMO signal demultiplexing can process reception signals the number of which is up to K branches, the MIMO signal demultiplexing can be performed with the highest efficiency by selecting K beams the correlation of which is low and the reception quality of which is high if the number of array antennas N is larger than the number of branches K.

Specific embodiments according to the present invention are described next.

<First Embodiment>

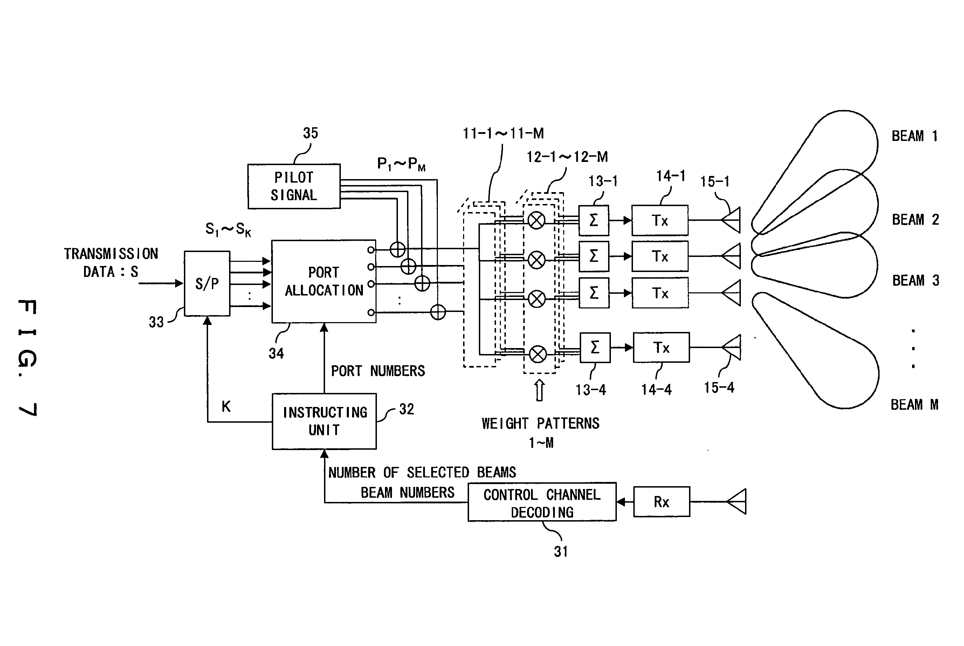

Fig. 7 shows the configuration of a transmitting apparatus according to the first embodiment. The basic configuration of the transmitting apparatus is as described with reference to Fig. 4, and comprises input ports 11-1~11-M, multiplication circuits 12-1~12-M, addition circuits 13-1~13-4, transmitters 14-1~14-4, and antennas 15-1~15-4. Namely, this transmitting apparatus can form M transmission beams by using four antenna elements. Although the antennas 15-1~15-4 are not particularly limited, they are arranged, for example, at intervals on the order of one half to one wavelength of a carrier wave.

A control channel decoding unit 31 decodes a control channel of a reverse link from a receiving apparatus (such as a mobile station). Here, this control channel includes selected beam number information for instructing the number of transmission beams to be used, and beam number information for identifying the transmission beams to be used, although this channel will be described in detail later. "the number of transmission beams to be used" is equivalent to the number of MIMO multiplexing.

An instructing unit 32 notifies a serial/parallel converting unit 33 of "the number of selected beams K", and also notifies a port allocating unit 34 of "beam numbers".

The serial/parallel converting unit 33 performs serial/parallel conversion for transmission data S according to "the number of selected beams K". Namely, the serial/parallel converting unit 33 generates K transmission data streams $S_1 \sim S_K$ from serial transmission data. However, serial/parallel conversion is not performed if the number of selected beams K = 1.

The port allocating unit 34 guides the transmission data streams $S_1 \sim S_K$ to the input ports 11-1~1-M instructed by port numbers. Additionally, the port allocating unit 34 has a function to notify the receiving apparatus of the number of MIMO multiplexing, and information (namely, port numbers) for identifying input ports actually used by the unit 34 itself by using a control channel.

A pilot signal generating unit 35 generates mutually orthogonal pilot signals $P_1 \sim P_M$, and feeds them to the corresponding input ports 11-1~11-M. Namely, the pilot signals are multiplexed to all of the transmission beams 1~M. The symbol values and the transmission powers of the pilot signals $P_1 \sim P_M$ are assumed to be recognized by the receiving apparatus.

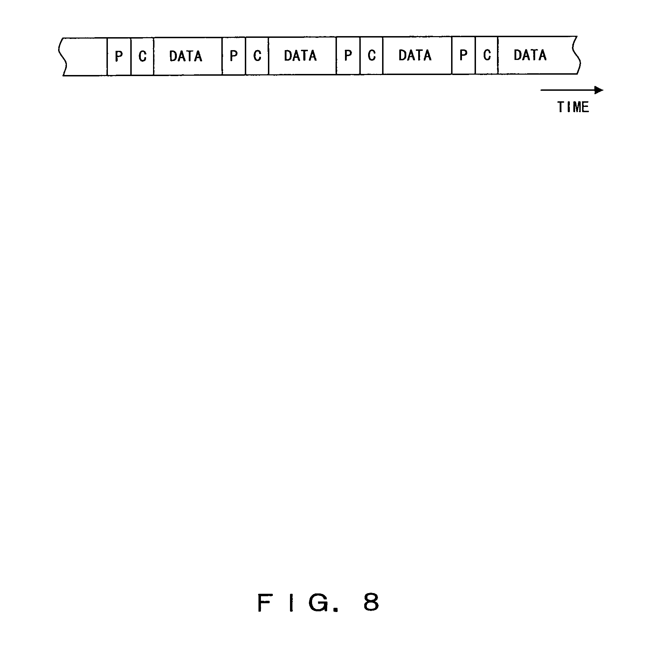

A pilot channel P for transmitting a pilot signal, the control channel C for transmitting control data, and a data channel for transmitting a data stream are, for example, time-division multiplexed as shown in Fig. 8. Or, these channels may be multiplexed with another method (such as frequency-division multiplexing, code-division multiplexing, etc.).

Assume that the number of selected beams K = 2, and port numbers 2, 3 are notified in the transmitting apparatus having the above described configuration. In this case, the serial/parallel converting unit 33 generates transmission data streams S1 and S2 from the transmission data stream S. Additionally, the port allocating unit 34 guides the transmission data stream S1 to the input port 11-2, and also guides the transmission data stream S2 to the input port 11-3. Then, the transmission data stream S1 is multiplied by a weight set 2 in the multiplication circuit 12-2. Therefore, the transmission data stream S1 is transmitted by a transmission beam 2. Additionally, the transmission data stream S2 is multiplied by a weight set 3 in the multiplication circuit 12-3. Therefore, the transmission data stream S2 is transmitted by a transmission beam 3. The pilot signals $P_1 \sim P_M$ are transmitted respectively by using the corresponding transmission beams 1~M.

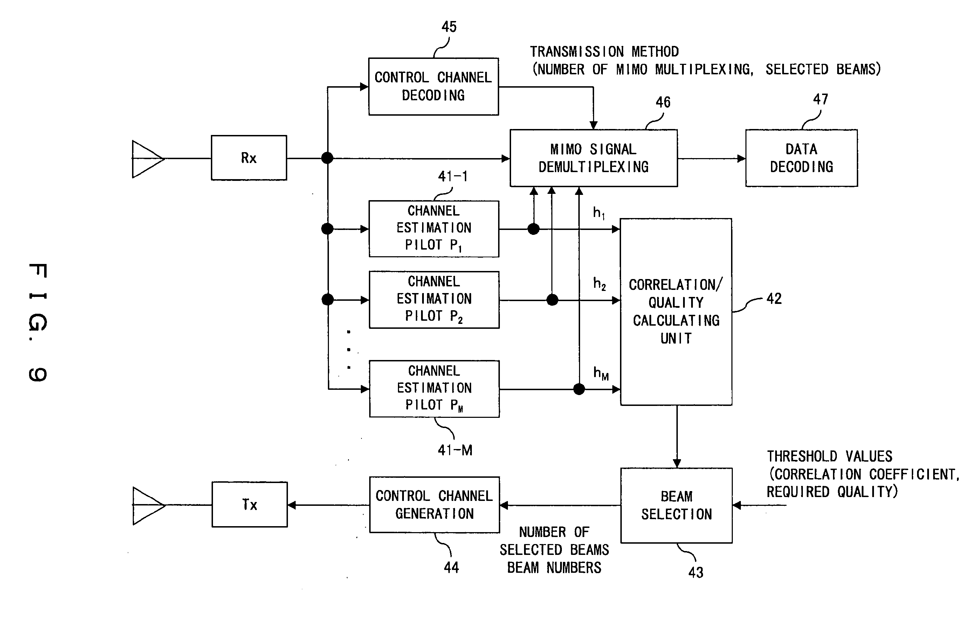

Fig. 9 shows the configuration of a receiving apparatus according to the first embodiment. This receiving apparatus is assumed to receive signals transmitted from the transmitting apparatus shown in Fig. 7 by using one reception antenna.

Channel estimating units 41-1~41-M respectively demodulate the pilot signals $P_1 \sim P_M$ that are multiplexed to the corresponding transmission beams 1~M, and calculate channel information h. For example, the channel estimating unit 41-1 demodulates the pilot signal P1 multiplexed to the transmission beam 1, and calculates channel information $h_1$. The channel estimating unit 41-M demodulates the pilot signal $P_M$ multiplexed to the transmission beam M, and calculates channel information $h_M$. The calculation of the channel information h is as described with reference to the equations (11)~(15).

A correlation/quality calculating unit 42 calculates a correlation coefficient for each combination of transmission beams based on the channel information $h_1 \sim h_M$ obtained by the channel estimating units 41-1~41-M. Here, a correlation coefficient between two arbitrary transmission beams is calculated with the above described equation (16). Additionally, the correlation/quality calculating unit 42 calculates the reception quality of each transmission beam. Here, the reception quality of each transmission beam is calculated with the above described equation (17) or (18).

A beam selecting unit 43 selects a plurality of transmission beams, the correlation coefficient of which is lower than a predetermined threshold value, from among the transmission beams 1~M based on the results of the calculation made by the correlation/quality calculating unit 42. Additionally, the beam selecting unit 43 selects a transmission beam, the reception quality of which is higher than a predetermined threshold value, from among the plurality of transmission beams the correlation coefficient of which is lower than the threshold value. If a transmission beam, the correlation coefficient of which is lower than the threshold value, does not exist, the beam selecting unit 43 selects a transmission beam with which the highest reception quality can be obtained.

A control channel generating unit 44 notifies the transmitting apparatus shown in Fig. 7 of the number of transmission beams (selected beam number information) selected by the beam selecting unit 43, and the beam numbers (beam number information) of the selected transmission beams via the control channel of the reverse link. In this way, transmission beams the correlation coefficient of which is lower than the threshold value and the reception quality of which is higher than the threshold value are selected and notified to the transmitting apparatus shown in Fig. 7. However, transmission beams selected based only on a correlation coefficient may be notified without monitoring reception quality.

A control channel decoding unit 45 detects a transmission method (the number of MIMO multiplexing, beam numbers, etc.) used in the transmitting apparatus shown in Fig. 7 by decoding the control channel. A MIMO signal demultiplexing unit 46 executes a MIMO demultiplexing process for a reception signal according to the transmission method detected by the control channel decoding unit 45. The MIMO signal demultiplexing unit 46 may execute the MIMO signal demultiplexing process according to the information obtained by the beam selecting unit 43. A data decoding unit 47 reproduces the transmission data stream S from the signals demultiplexed by the MIMO signal demultiplexing unit 46.

The MIMO signal process is described. Here, assume that the number of MIMO multiplexing is "2", and the data streams S1 and S2 are transmitted from the transmitting apparatus shown in Fig. 7 by using the transmission beams 2 and 3. Also assume that a modulation method is QPSK. That is to say, each data symbol is arranged at any one of signal points (+1, +1), (-1, +1), (-1, -1), and (+1, -1), and transmitted. Still further assume that the MIMO signal demultiplexing is made according to the MLD algorithm.

In this case, the data streams S1 and S2 are estimated from a reception signal X according to the above described equation (10). At this time, only channel information $h_2$ corresponding to the transmission beam 2, and channel information $h_3$ corresponding to the transmission beam 3 are used among M pieces of channel information $h_1 \sim h_M$ corresponding to the transmission beams 1~M. Specifically, the following Euclidean distances D1~D16 are calculated.

$$D1 = |x - h_2 \cdot S_{+1, +1} - h_3 \cdot S_{+1, +1}|$$

$$D2 = |x - h_2 \cdot S_{+1, +1} - h_3 \cdot S_{-1, +1}|$$

$$D3 = |x - h_2 \cdot S_{+1, +1} - h_3 \cdot S_{-1, -1}|$$

$$D4 = |x - h_2 \cdot S_{+1, +1} - h_3 \cdot S_{+1, -1}|$$

$$D5 = |x - h_2 \cdot S_{-1, +1} - h_3 \cdot S_{+1, +1}|$$

$$D6 = |x - h_2 \cdot S_{-1, +1} - h_3 \cdot S_{-1, +1}|$$

$$D7 = |x - h_2 \cdot S_{-1, +1} - h_3 \cdot S_{-1, -1}|$$

$$D8=|x-h_2 \cdot S_{-1,+1} -h_3 \cdot S_{+1,-1}|$$

$$D9=|x-h_2 \cdot S_{-1,-1} -h_3 \cdot S_{+1,+1}|$$

$$D10=|x-h_2 \cdot S_{-1,-1} -h_3 \cdot S_{-1,+1}|$$

$$D11=|x-h_2 \cdot S_{-1,-1} -h_3 \cdot S_{-1,-1}|$$

$$D12=|x-h_2 \cdot S_{-1,-1} -h_3 \cdot S_{+1,-1}|$$

$$D13=|x-h_2 \cdot S_{+1,-1} -h_3 \cdot S_{+1,+1}|$$

$$D14=|x-h_2 \cdot S_{+1,-1} -h_3 \cdot S_{-1,+1}|$$

$$D15=|x-h_2 \cdot S_{+1,-1} -h_3 \cdot S_{-1,-1}|$$

$$D16=|x-h_2 \cdot S_{+1,-1} -h_3 \cdot S_{+1,-1}|$$

A minimum value is obtained from among D1~D16. Then, the combination of S2 and S3, with which the minimum value can be obtained, is estimated as the most probable transmission data symbol. For example, if D1 is assumed to be the minimum among D1~D16, "S2= (+1, +1)" "S3= (+1 +1)" is obtained as the estimation value of the transmission symbol.

In the example shown in Fig. 9, the receiving apparatus is configured to receive signals with only one reception antenna. However, the receiving apparatus may be configured to comprise a plurality of reception antennas. In this case, signals received respectively via the reception antennas are distributed to the control channel decoding unit 45, the MIMO signal demultiplexing unit 46, and the channel estimating units 41-1~41-M. The plurality of reception antennas are used and Euclidean distances obtained respectively with the antennas are combined and processed, thereby improving the reception quality owing to a diversity gain.

As described above, in the first embodiment, a plurality of transmission beams the correlation of which is low and the reception quality of which is high are selected in the receiving apparatus, and notified to the transmitting apparatus. Then, the transmitting apparatus transmits data streams by using the notified transmission beams. If a plurality of transmission beams are selected at this time, a MIMO multiplexing transmission is performed. On the other hand, if a plurality of transmission beams are not selected, a data transmission is performed by using one transmission beam with which the highest reception quality can be obtained.

<Second Embodiment>

In a communication system according to the second embodiment, a correlation coefficient between beams and the reception quality information of each beam, which are measured in a receiving apparatus, are fed back to a transmitting apparatus unchanged by using a reverse link. Then, the correlation coefficient and the reception quality information are compared with preset threshold values in the transmitting apparatus, whereby the number of selected beams (the number of MIMO multiplexing) and beam numbers are determined in the transmitting apparatus.

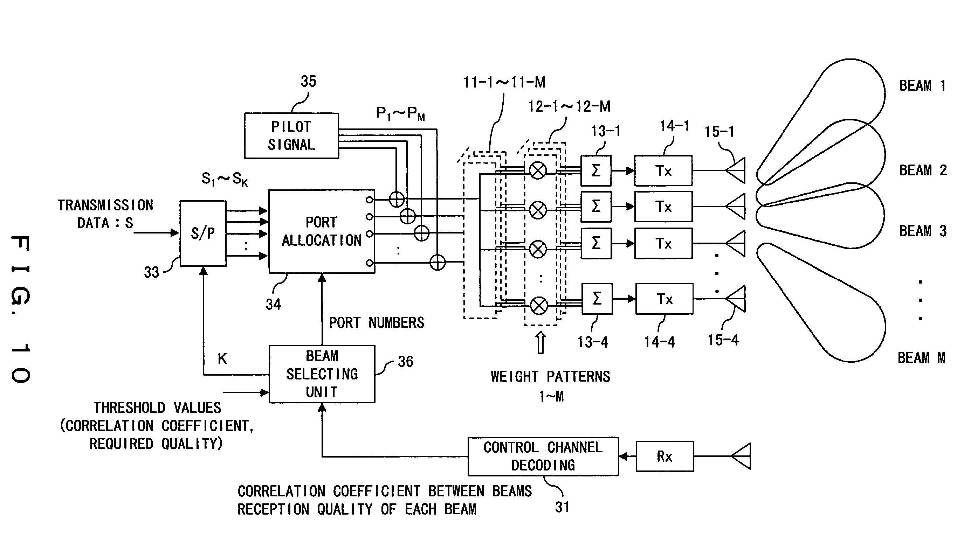

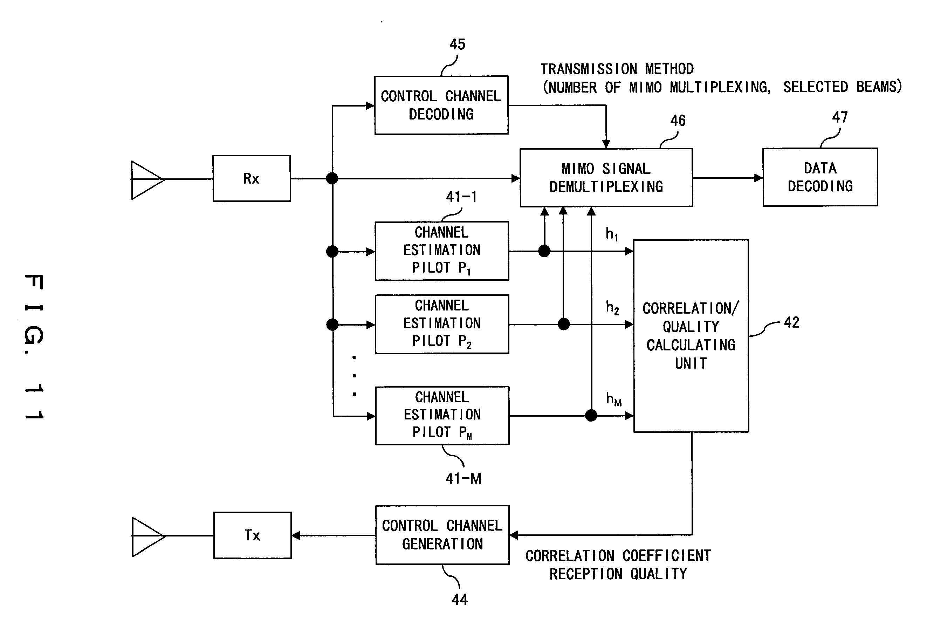

To implement this, the transmitting apparatus according to the second embodiment comprises a beam selecting unit 36 for determining the number of MIMO multiplexing and beam numbers based on a correlation coefficient between transmission beams and the reception quality of each transmission beam, as shown in Fig. 10. The function of the beam selecting unit 36 is fundamentally the same as the beam selecting unit 43 shown in Fig. 9. Additionally, a receiving apparatus according to the second embodiment does not comprise the beam selecting unit 43 as shown in Fig. 11.

In a cellular mobile communication, a transmitting apparatus is assumed to be a base station. Therefore, the base station determines the number of MIMO multiplexing based on a correlation coefficient and communication quality information, whereby the transmission efficiency of the entire communication system can be optimized.

<Third Embodiment>

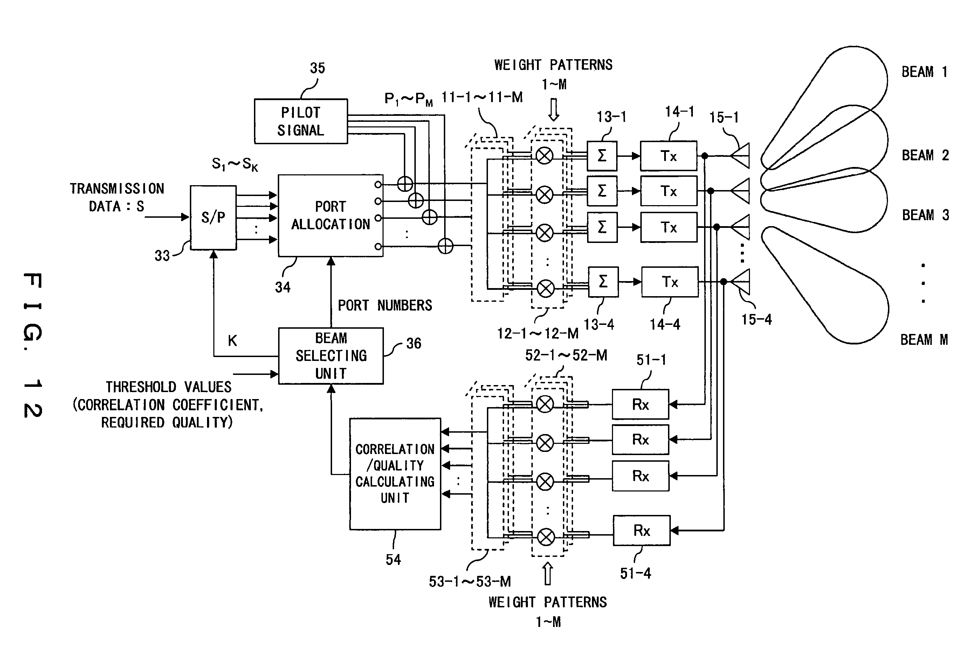

Fig. 12 shows the configuration of a transmitting apparatus according to the third embodiment. The transmitting apparatus according to the third embodiment estimates a correlation coefficient between transmission beams and the quality of each transmission beam by forming a reception beam the directionality of which is the same as a transmission beam. An array antenna configured with antennas 15-1~15-4 is shared for transmission and reception.

Multiplication circuits 52-1~52-M respectively multiply signals received via corresponding receivers 51-1~51-M by corresponding weight sets 1~M. Here, assume that a calibration is suitably made for the weight sets 1~M beforehand to form reception beams 1~M the directionalities of which are the same as the transmission beams 1~M. The configuration of the multiplication circuits 52-1~52-M is fundamentally the same as that of the multiplication circuits 12-1~12-M.

A correlation/quality calculating unit 54 estimates a correlation between transmission beams, and the quality of each transmission beam based on signals $r_1$~$r_M$ received via output ports 53-1~53-M. Here, the signals $r_1$~$r_M$ may be calculated according to the above described (22). Then, the estimation value of the correlation coefficient between transmission beams is calculated by using the equation (19). Additionally, the estimation value of the quality of each transmission beam is calculated by using the equation (20) or (21).

A beam selecting unit 36 selects the number of selected beams (the number of MIMO multiplexing) and transmission beams to be used as described with reference to Fig. 10. Then, the transmitting apparatus transmits data streams by using the selected transmission beams.

In the third embodiment, the transmitting apparatus can select one or a plurality of transmission beams to be used by using reception beams the directionalities of which are the same as transmission beams. At this time, the receiving apparatus does not need to measure a correlation between transmission beams, and the like.

<Fourth Embodiment>

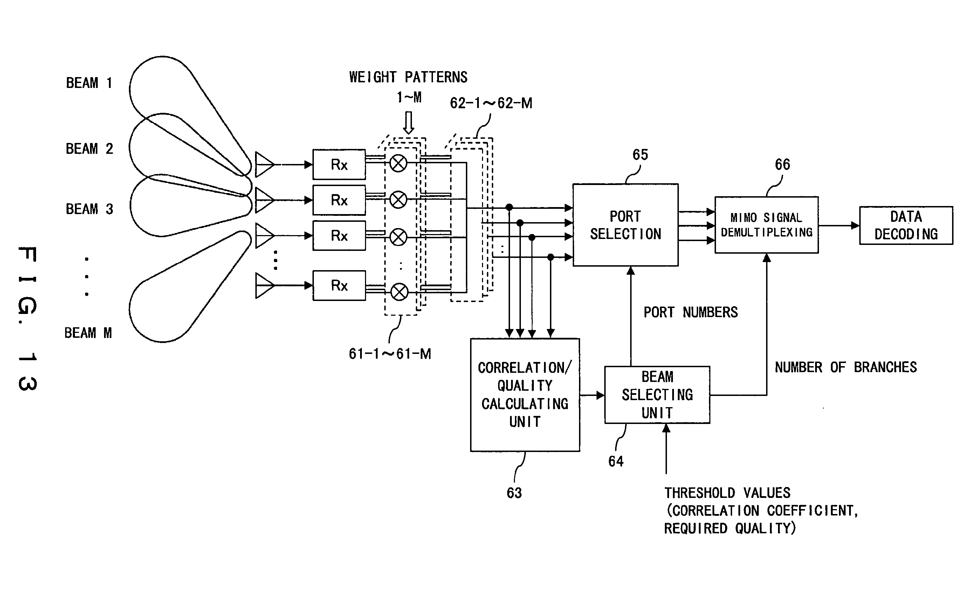

Fig. 13 shows the configuration of a receiving apparatus according to the fourth embodiment. In the fourth embodiment, the present invention is applied to MIMO signal demultiplexing in the receiving apparatus.

The receiving apparatus according to the fourth embodiment forms a multi-beam (reception beams 1~M) by using a reception array antenna. The reception beams 1~M are implemented by multiplying reception signals by weight sets 1~M in multiplication circuits 61-1~61-M. As a result, reception ports 62-1~62-M respectively output signals that are received by using the corresponding reception beams 1~M.

A correlation/quality calculating unit 63 calculates a correlation coefficient between reception beams, and the quality of each reception beam. Assume that channel information h is obtained beforehand by using pilot signals transmitted from the transmitting apparatus. The correlation coefficient between reception beams is calculated with the above described equation (16) . Additionally, the quality of each reception beam is calculated with the equation (17) or (18).

A beam selecting unit 64 obtains the number of branches and port numbers by comparing the results of the calculation, which are obtained by the correlation/quality calculating unit 63, with corresponding threshold values. Operations of the beam selecting unit 64 are the same as the beam selecting unit 43 shown in Fig. 9. Additionally, "the number of branches" is equivalent to the number of selected beams. However, as "the number of branches", a value that is smaller than the number of branches, which can be processed by a computation circuit for performing the MIMO signal demultiplexing, is selected.

A port selecting unit 65 selects a port indicated by the beam selecting unit 64 from among output ports 62-1~62-M. As a result, only a signal that is received via a reception beam, the correlation of which is low and the reception quality of which is high, is transmitted to a MIMO signal demultiplexing unit 66. The MIMO signal demultiplexing unit 66 executes a MIMO signal demultiplexing process according to the number of branches, which is notified from the beam selecting unit 64. The MIMO signal demultiplexing process itself follows an existing algorithm (such as the above described ZF, MMSE, MLD, etc.)

As described above, in the fourth embodiment, beams the number of which is equivalent to the number of branches supported by the MIMO signal demultiplexing circuit are suitably selected from among a plurality of reception beams, whereby the communication quality can be improved to a maximum extent.

According to the present invention including the first to the fourth embodiments, the following effects can be obtained.

　　(1) In a transmitting apparatus comprising an array antenna, a MIMO multiplexing transmission can be implemented

EP 1 833 186 A1

without changing the number of antennas, the configuration of a transmitter, and the like. Accordingly, a transmission using an array antenna, and a MIMO multiplexing transmission can be made to coexist within the same transmitting apparatus.

(2) Since there is no need to increase the number of antennas in a transmitting apparatus, a system where a MIMO multiplexing transmission and an array antenna coexist can be implemented at low cost.

(3) A high-speed rate transmission, which is implemented by a MIMO multiplexing transmission, can be provided to a user who satisfies a predetermined condition while increasing coverage and reducing the power consumption of a terminal by using an array antenna.

(4) A data transmission is made while adaptively switching between an array antenna transmission and a MIMO multiplexing transmission according to the state of a propagation path, thereby improving the transmission efficiency of a system.

(5) If the present invention is applied to a reception process, preferable reception beams are selected within a range of the number of branches that can be processed by a comprised MIMO signal demultiplexing circuit. Therefore, a reception characteristic can be optimized according to the number of array antennas without changing the MIMO signal demultiplexing circuit.

**Claims**

1. A communicating apparatus used in a wireless communication system, comprising:

    a plurality of antennas;
    transmission beam forming means for forming a plurality of transmission beams by multiplying said plurality of antennas by transmission weight sets of a plurality of patterns; and
    transmitting means for transmitting mutually different data streams by using two or more transmission beams, a correlation of which is lower than a predetermined correlation threshold value, among the plurality of transmission beams.

2. The communicating apparatus according to claim 1, wherein
    said transmitting means transmits mutually different data streams by using two or more transmission breams, a correlation of which is lower than a predetermined correlation threshold value and reception quality of which is higher than a predetermined quality threshold value, among the plurality of transmission beams.

3. The communicating apparatus according to claim 1 or 2, wherein
    said transmitting means transmits data by using one transmission beam reception quality of which is the highest, if two or more transmission beams are not selected.

4. A communicating apparatus according to any one of claims 1~3, further comprising:

    reception beam forming means for forming a plurality of reception beams having same antenna directionalities as the plurality of transmission beams formed by said transmission beam forming means; and
    selecting means for estimating a correlation between transmission beams, and reception quality of each transmission beam based on signals received by using the plurality of reception beams, and for selecting two or more transmission beams based on results of the estimation.

5. A receiving apparatus that receives signals transmitted from the communicating apparatus according to any one of claims 1~3, comprising:

    measuring means for measuring a correlation between transmission beams, and reception quality of each transmission beam by receiving pilot signals that are respectively transmitted by using the plurality of transmission beams; and
    transmitting means for transmitting results of the measurement made by said measuring means to said communicating apparatus.

6. A receiving apparatus that receives signals transmitted from the communicating apparatus according to any one of claims 1~3, comprising:

    measuring means for measuring a correlation between transmission beams, and reception quality of each transmission beam by receiving pilot signals that are respectively transmitted by using the plurality of transmission beams;

selecting means for selecting transmission beams to be used by the communicating apparatus based on results of a measurement made by said measuring means; and

notifying means for notifying the communicating apparatus of the transmission beams selected by said selecting means.

7. A wireless communication system where a transmitting apparatus that comprises a plurality of antennas transmits data to a receiving apparatus, comprising:

transmission beam forming means, which is provided in the transmitting apparatus, for forming a plurality of transmission beams by multiplying the plurality of antennas by transmission weight sets of a plurality of patterns;

measuring means, which is provided in the receiving apparatus, for measuring a correlation between transmission beams by receiving signals that are respectively transmitted by using the plurality of transmission beams;

selecting means for selecting two or more transmission beams, a correlation of which is lower than a predetermined correlation threshold value, from among the plurality of transmission beams based on results of a measurement made by said measuring means; and

transmitting means, which is provided in the transmitting apparatus, for transmitting mutually different data streams by using the two or more transmission beams selected by said selecting means.

8. The wireless communication system according to claim 7, wherein:

said measuring means measures a correlation between transmission beams, and reception quality of each transmission beam by receiving the signals that are respectively transmitted by using the plurality of transmission beams; and

said selecting means selects two or more transmission beams, a correlation of which is lower than a predetermined correlation threshold value and reception quality of which is higher than a predetermined quality threshold value, from among the plurality of transmission beams.

9. The wireless communication system according to claim 7 or 8, wherein
said selecting means is provided in the receiving apparatus.

10. The wireless communication system according to claim 7 or 8, wherein
said selecting means is provided in the transmitting apparatus.

11. The wireless communication system according to claim 7 or 8, wherein
the receiving apparatus further comprises demultiplexing means for demultiplexing data streams transmitted from the transmitting apparatus based on information that represents a transmission beam actually used by said transmitting means in the transmitting apparatus.

12. The wireless communication system according to claim 11, wherein
the information that represents the transmission beam is notified from the transmitting apparatus to the receiving apparatus.

13. A wireless communication method used in a system where a transmitting apparatus that comprises a plurality of antennas transmits data to a receiving apparatus, comprising:

forming a plurality of transmission beams by multiplying the plurality of antennas by transmission weight sets of a plurality of patterns;

measuring a correlation between transmission beams based on signals that are respectively transmitted by using the plurality of transmission beams;

selecting two or more transmission beams, a correlation of which is lower than a predetermined correlation threshold value, from among the plurality of transmission beams based on results of the measurement; and

transmitting mutually different data streams by using the selected two or more transmission beams.

14. The wireless communication method according to claim 13, further comprising:

measuring reception quality of each transmission beam; and

transmitting mutually different data streams by using two or more transmission beams, a correlation of which is lower than a predetermined correlation threshold value and reception quality of which is higher than a predetermined quality threshold value, among the plurality of transmission beams.

15. A communicating apparatus used in a wireless communication system that spatially multiplexes and transmits a plurality of mutually different data streams, comprising:

a plurality of antennas;
reception beam forming means for forming a plurality of reception beams by multiplying said plurality of antennas by reception weight sets of a plurality of patterns;
selecting means for selecting two or more reception beams, a correlation of which is lower than a predetermined correlation threshold value, from among the plurality of reception beams; and
demultiplexing means for demultiplexing the plurality of data streams by using reception signals that are obtained via the two or more reception beams selected by said selecting means.

16. The communicating apparatus according to claim 15, wherein
said selecting means selects two or more reception beams, a correlation of which is lower than a predetermined correlation threshold value and reception quality of which is higher than a predetermined quality threshold value, from among the plurality of reception beams.

F I G. 1

F I G. 2

F I G. 3

# F I G. 4

WEIGHT SETS 1~M

DATA STREAM1

DATA STREAM2

11-1~11-M

12-1~12-M

13-1

13-4

14-1

14-4

15-1

15-4

Tx

Tx

Tx

Tx

BEAM 1

BEAM 2 / STREAM 1

BEAM 3 / STREAM 2

BEAM 4

BEAM M

1

2

EP 1 833 186 A1

12-1

21-1    $W_{11}$

21-2    $W_{12}$

INPUT PORT
11-1

21-3    $W_{13}$

21-4    $W_{14}$

12-M

21-1    $W_{m1}$

21-2    $W_{m2}$

INPUT PORT
11-M

21-3    $W_{m3}$

21-4    $W_{m4}$

F I G. 5

F I G. 6

F I G. 7

| P | C | DATA | P | C | DATA | P | C | DATA | P | C | DATA |
|---|---|------|---|---|------|---|---|------|---|---|------|

TIME

F I G. 8

F I G. 9

F I G. 1 0

F I G. 1 1

F I G. 1 2

F I G. 1 3

<div style="text-align:center">**INTERNATIONAL SEARCH REPORT**</div>

| | International application No. |
|---|---|
| | PCT/JP2004/019650 |

**A. CLASSIFICATION OF SUBJECT MATTER**
Int.Cl⁷ H04J15/00

According to International Patent Classification (IPC) or to both national classification and IPC

**B. FIELDS SEARCHED**

Minimum documentation searched (classification system followed by classification symbols)
Int.Cl⁷ H04J15/00

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2005 |
| Kokai Jitsuyo Shinan Koho | 1971-2005 | Jitsuyo Shinan Toroku Koho | 1996-2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2004-194262 A (NTT Docomo Inc.),<br>08 July, 2004 (08.07.04),<br>Par. Nos. [0071] to [0099]; Figs. 5, 6<br>(Family: none) | 1-16 |
| A | JP 2004-328464 A (Samsung Electronics Co., Ltd.),<br>18 November, 2004 (18.11.04),<br>Par. Nos. [0004], [0027] to [0035]; Figs. 1, 14<br>& EP 1471663 A2 & US 2004/0213187 A1<br>& JP 2005-012357 A & KR 2004092400 A | 1-16 |

☐ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 15 March, 2005 (15.03.05) | 29 March, 2005 (29.03.05) |

| Name and mailing address of the ISA/<br>Japanese Patent Office | Authorized officer |
|---|---|
| Facsimile No. | Telephone No. |

Form PCT/ISA/210 (second sheet) (January 2004)

**EP 1 833 186 A1**

## INTERNATIONAL SEARCH REPORT

| International application No. |
|---|
| PCT/JP2004/019650 |

C (Continuation). DOCUMENTS CONSIDERED TO BE RELEVANT

| Category* | Citation of document, with indication, where appropriate, of the relevant passages | Relevant to claim No. |
|---|---|---|
| A | Masaaki FUJII, "Beamspace-Time Transmit Diversity for Time-Domain Spreading OFDM-CDM Systems", IEICE TRANSACTIONS on Fundamentals of Electronics, Communications and Computer Sciences, 01 January, 2003 (01.01.03), Vol.E86-B, No.1, pages 344 to 351 | 1-16 |
| A | Takeo OHGANE, Yasutaka OGAWA, Kiyohika ITOH, "A Study on a Channel Allocation Scheme with an Adaptive Array in SDMA", In:Vehicular Technology Conference Spring 1997 IEEE 47th, 07 May, 1997 (07.05.97), Vol.2, pages 725 to 729 | 1-16 |
| A | Daisuke TANAKA, Takeo OGANE, Yasutaka OGAWA, "3 Soshi Adaptive Array o Mochiita SDMA Hoshiki no Kosonritsu Tokusei", The Institute of Electronics, Information and Communication Engineers Gijutsu Kenkyu Hokoku, 20 February, 1998 (20.02.98), Vol.97, No.549, pages 95 to 100 | 1-16 |

Form PCT/ISA/210 (continuation of second sheet) (January 2004)

EP 1 833 186 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003338781 A
- JP 2004072566 A